# EUROPEAN PATENT SPECIFICATION

(11) **EP 3 395 544 B1**
(45) Date of publication and mention of the grant of the patent: **09.10.2019**
(21) Application number: 17187137.9
(22) Date of filing: 21.08.2017
(51) Int. Cl.: B29C 64/20, B29C 64/245, B33Y 30/00, B29C 64/112

(54) **THREE DIMENSIONAL PRINTING APPARATUS**
VORRICHTUNG ZUM DREIDIMENSIONALEN DRUCKEN
IMPRIMANTE EN TROIS DIMENSIONS

(30) Priority: 26.04.2017 TW 106113876
(43) Date of publication of application: 31.10.2018
(73) Proprietor: XYZprinting, Inc., New Taipei City 22201 (TW); Kinpo Electronics, Inc., New Taipei City 22201 (TW)
(72) Inventor: LEE, Yang-Teh, 22201 Shenkeng Dist., New Taipei City (TW); JUANG, Jia-Yi, 22201 Shenkeng Dist., New Taipei City (TW); HUANG, Chun-Hsiang, 22201 Shenkeng Dist., New Taipei City (TW); HO, Ming-En, 22201 Shenkeng Dist., New Taipei City (TW); HSIEH, Yi-Chu, 22201 Shenkeng Dist., New Taipei City (TW); CHU, Ting-Chun, 22201 Shenkeng Dist., New Taipei City (TW)
(74) Representative: 2K Patentanwälte Blasberg Kewitz & Reichel

(56) References cited:
- EP-A2- 0 227 344
- WO-A1-2016/050321
- US-A1- 2012 127 229
- US-A1- 2015 360 477

## Description

### TECHNICAL FIELD

The disclosure relates to a three-dimensional printing apparatus.

### BACKGROUND

Through the development of science and technology, various methods of constructing a physical three-dimensional (3-D) model by adopting the additive manufacturing technology, such as a layer-by-layer structuring model, have been proposed. In general, the additive manufacturing technology transforms design information of the 3D model constructed by software such as computer-aided design (CAD) software into a plurality of thin (quasi-two-dimensional) cross-sectional layers that are stacked continuously. Meanwhile, many technical means capable of forming a plurality of thin cross-section layers are gradually provided

Comparing the conventional two-dimensional printing with the three-dimensional printing, in addition to the different materials used, the conventional two-dimensional printing differs in requiring a specific medium as carrier for a two-dimensional pattern to be printed thereon. However, there is no significant difference when it comes to how the printing nozzle is driven. In other words, the difference between two-dimensional printing and three-dimensional printing only lies in whether the nozzle module is driven in a two-dimensional or three-dimensional mode.

Thus, how to use finite resources and structures while carry out two-dimensional printing and three-dimensional printing with the same apparatus to bring forth a beneficial printing performance has become an issue for the artisans in related fields to work on.

US 2015/360477 discloses an inkjet printing system, wherein the print-heads are constructed to be able to produce two-dimensional printing as well as dispensing material to produce three-dimensional objects. WO 2016/050321 discloses a 3D printer based on jetting of build material, comprising a build platform and a calibration platform, which is adapted to receive a removable print medium (e.g. paper sheet); calibration of the print head positioning is effected in 2D mode by printing on the print medium. EP 0 227 344 A2 discloses an inkjet printer, wherein said printer does not include a print medium feeding mechanism but is adapted to be associated with a removable print medium feeding mechanism. US 2012/127229 discloses an inkjet printer on which a feeding device is detachably mounted for feeding a recording medium to the printer.

### SUMMARY

The disclosure provides a three-dimensional printing apparatus. As a feeding module is detachably disposed to a frame, a composite nozzle module is able to correspondingly perform two-dimensional printing or three-dimensional printing according to whether the feeding module is disposed or not. Therefore, the applicability of the three-dimensional printing apparatus is expanded.

An embodiment of the disclosure provides a three-dimensional printing apparatus including a frame, a control module, a nozzle module, and a feeding module. The nozzle module is movably disposed in the frame and electrically connected to the control module. The control module drives the nozzle module to move in the frame and define a printing space, and the control module drives the nozzle module to print a three-dimensional object in the printing space. The feeding module is detachably assembled to the frame and electrically connected to the control module. The control module is adapted to drive the feeding module to transfer a medium to the printing space and drives the nozzle module to print a two-dimensional pattern on the medium.

Based on the above, the nozzle module of the three-dimensional printing apparatus has a composite printing capability. With the feeding module being assembled to the frame and electrically connected to the control module, the nozzle module may be driven to print the two-dimensional pattern on the medium after the feeding module is driven to transfer the medium to the printing space. After the feeding module is detached from the frame, the capability of the nozzle module printing the three-dimensional object in the printing space is restored. Accordingly, the three-dimensional printing apparatus is capable of two-dimensional and three-dimensional printing, and the applicability of the three-dimensional printing apparatus is thus expanded.

### BRIEF DESCRIPTION OF THE DRAWINGS

FIG. 1 is a schematic view illustrating a three-dimensional printing apparatus according to an embodiment of the disclosure.
FIG. 2 is a schematic view illustrating the three-dimensional printing apparatus of FIG. 1 in another operation state.
FIG. 3 is a schematic view illustrating electrical connection of components of a three-dimensional printing apparatus of the disclosure.
FIG. 4 is a partial side view illustrating the three-dimensional printing apparatus of FIG. 2.
FIGs. 5 to 8 are schematic views illustrating operation modes of a three-dimensional printing apparatus.
FIG. 9 is a schematic view illustrating a mode of a three-dimensional printing apparatus according to another embodiment of the disclosure.

### DETAILED DESCRIPTION OF DISCLOSED EMBODIMENTS

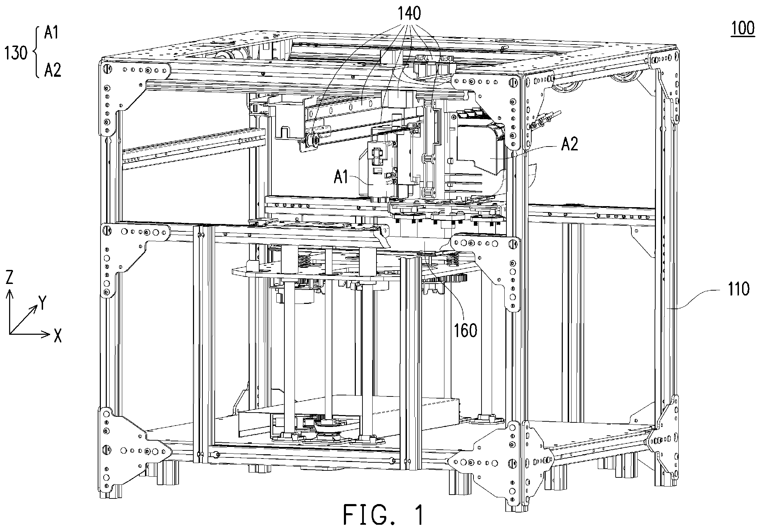

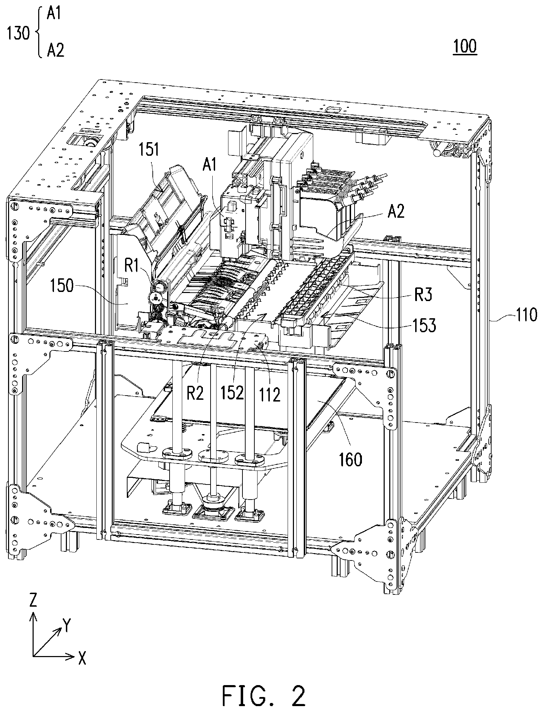

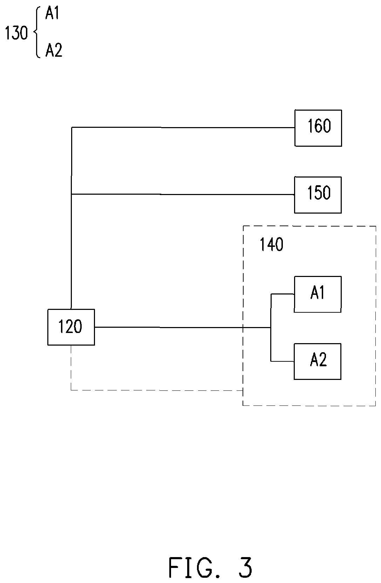

FIG. 1 is a schematic view illustrating a three-dimensional printing apparatus according to an embodiment of the disclosure. FIG. 2 is a schematic view illustrating the three-dimensional printing apparatus of FIG. 1 in another operation state. FIG. 3 is a schematic view illustrating electrical connection of components of a three-dimensional printing apparatus of the disclosure. It should be noted that some irrelevant structures in FIGs. 1 and 2 are omitted for the convenience of illustrating and identifying necessary components and parts. Meanwhile, a Cartesian coordinate system is provided in the figures for the ease of description.

Referring to FIGs. 1 to 3, in the embodiment, a three-dimensional printing apparatus 100 includes a frame 110, a control module 120, a nozzle module 130, a forming stage 160, and a driving module 140. The three-dimensional printing apparatus 100 is a fused deposition modeling (FDM) printing apparatus, for example, where the control module 120 refers to design data of a three-dimensional model, drives the nozzle module 130 to coat a forming material layer by layer on the forming stage 160, and cures the forming material to form a cross-sectional layer. Accordingly, a three-dimensional object is formed through layer-by-layer stacking and construction. The structure of FIG. 1 illustrates a state of use when the three-dimensional printing apparatus 100 generates a three-dimensional object.

In order to expand the applicability of the three-dimensional printing apparatus, the three-dimensional printing apparatus 100 of the embodiment further includes a feeding module 150. The feeding module 150 is disposed in the frame 110 through an assembling frame 112, and operates with the nozzle module 130 for two-dimensional printing. The structure of FIG. 2 illustrates a state of components when the three-dimensional printing apparatus 100 performs two-dimensional printing.

Specifically, the nozzle module 130 of the embodiment is disposed in the frame 110 and movable through the driving module 140. In addition, the nozzle module 130 is electrically connected to the control module 120. Here, the driving module 140 is formed by a plurality of driving components, such as a drive-motor, a gear, a belt, a rail, and the like. With the driving module 140, the nozzle module 130 is movable in the frame 110. Here, the types and configurations of the respective components are not specifically limited. Namely, the embodiment is applicable as long as a component is capable of driving the nozzle module 130 after being electrically connected to the control module 120. As shown in FIG. 1, the nozzle module 130 includes a three-dimensional assembly A1 and an inkjet assembly A2. The three-dimensional assembly A1 and the inkjet assembly A2 are disposed to the same driving component to be moved/driven synchronously. In other words, the nozzle module 130 of the embodiment is a composite nozzle module. The control module 120 may drive the three-dimensional printing assembly A1 to print the three-dimensional object on the forming stage 160 and drive the inkjet assembly A2 to print a two-dimensional pattern. Moreover, in the embodiment, the inkjet assembly A2 may further perform inkjet printing and coloring on the three-dimensional object.

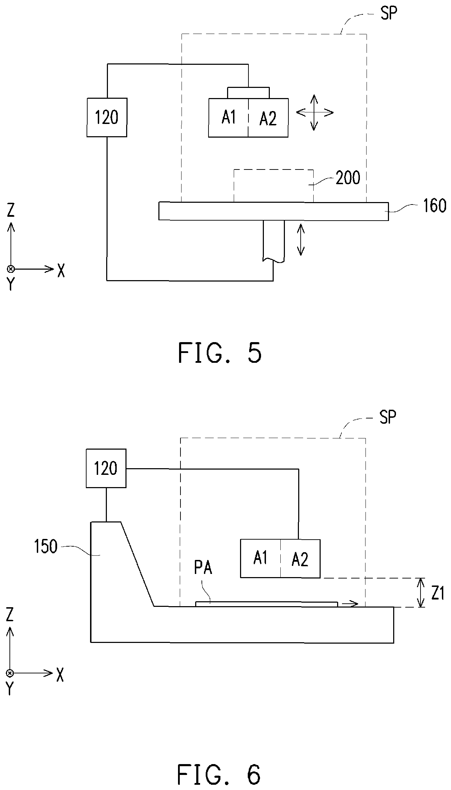

FIG. 5 is a schematic view illustrating a mode of use of the three-dimensional printing apparatus. Here, the illustration is simplified for the ease of description. Referring to FIGs. 1 and 5 at the same time, in the embodiment, the nozzle module 130 is driven by the control module 120 to move in the frame 110 and consequently define a printing space SP. The printing space SP is provided for three-dimensional printing. Therefore, the control module 120 is able to drive the nozzle module 130 to move in the printing space SP and drive the forming stage 160 to move along the Z-axis correspondingly. Consequently, the three-dimensional printing assembly A1 is driven to form a three-dimensional object 200 on the forming stage 160 through stacking layer by layer. Meanwhile, the control module 120 may also drive the inkjet assembly A2 to color the three-dimensional object 200.

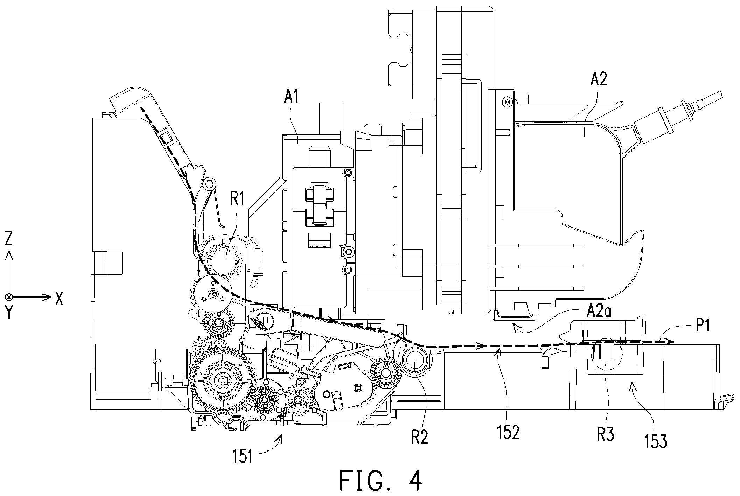

FIG. 4 is a partial side view illustrating the three-dimensional printing apparatus of FIG. 2. FIG. 5 is a schematic view illustrating a mode of use of the three-dimensional printing apparatus corresponding to the states of FIGs. 2 and 4. Referring to FIGs. 2, 4, and 6, when two-dimensional printing is performed, the forming stage 160 is moved away from the printing space SP, and the feeding module 150 is assembled to the frame 110 through the assembling frame 112 to electrically connect the feeding module 150 and the control module 120. In the embodiment, the forming stage 160 is driven by the control module 120 to be moved away from printing space SP and to the bottom of an internal space of the frame 110. Accordingly, a space for assembling the feeding module 150 becomes available.

As shown in FIG. 4, the feeding module 150 includes transfer rollers R1, R2, and R3, a feed-in member 151, a printing member 152, and a feed-out member 153. After the user places a medium PA into the feed-in member 151, the control module 120 drives the transfer rollers R1 and R2 to transfer the medium PA to the printing member 152 along a path P1. Under the circumstance, a print head A2a of the inkjet assembly A2 may perform inkjet printing on the medium PA at the printing member 152. As shown in FIG. 6, the print head A2a may be a piezoelectric print head or a thermal print head. Details of the print head A2a may be referred to the conventional inkjet printing technologies, and details in this regard will not be described in the following. Here, the feeding module 150 shown in FIG. 6 is the same as the feeding module 150 shown in FIGs. 2 and 4, but only the profile is illustrated in FIG. 6 for the ease of identification. Besides, in an embodiment not shown herein, the three-dimensional printing apparatus may further include a scan module. The scan module may be detachably disposed to the feed-out member of the feeding module to scan the medium passing through.

It is also noteworthy that the medium PA of the embodiment is a two-dimensional object, such as paper. However, the disclosure is not limited thereto. The embodiment is applicable as long as an object is able to be driven by the feeding module 150 to be transferred to the printing space SP. Accordingly, the inkjet assembly A2 is able to print the two-dimensional pattern on the medium PA.

It is noteworthy that, in the printing shown in FIG. 6, the medium is continuously driven by the transfer rollers R1 and R2 to be sequentially transferred through the feed-in member 151 and the printing member 152, and is also continuously driven by the transfer roller R3 at the feed-out member 153 to be moved out of the feeding module 150 from the feed-out member 153. Under the circumstance, the inkjet assembly A2 is substantially fixedly located at a position in the printing space SP corresponding to the printing member 152, and keeps a predetermined height Z1 with respect to the printing member 152 to perform inkjet printing and coloring. In other words, in the embodiment, the inkjet assembly A2 is controlled by the control module 120 to remain still in the printing space SP. Accordingly, the transfer rollers R1, R2, and R3 continuously drive and move the medium PA in the positive X-axis direction until the medium PA is moved out of the feeding module 150. Thus, in the embodiment, the medium PA may completely be located in the printing space SP, or only the portion of the medium PA passing through the printing member 152 is located in the printing space SP. Namely, the feeding module 150 only requires the printing member 152 to be located in the printing space SP.

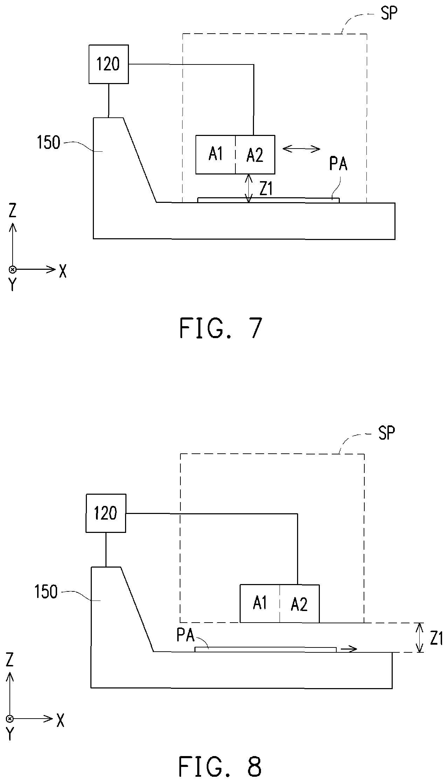

FIG. 7 is a schematic view illustrating the three-dimensional printing apparatus in another mode. Referring to FIG. 7, what differs from the previous mode is that, the medium PA is located at a predetermined position after being transferred to the printing space SP. Under the circumstance, the medium PA is completely located in the printing space SP. Therefore, in the mode, the control module 120 drives the inkjet assembly A2 to move in the printing space SP, and the inkjet assembly A2 is substantially operated on a plane to perform two-dimensional printing. The plane is parallel to the printing member, i.e., parallel to the X-Y plane, and the plane also keeps the predetermined height Z1 relative to the printing member. After printing is completed, the medium PA is transferred from the printing member 152 to the feed-out member 153 by the transfer roller R3.

FIG. 8 is a schematic view illustrating the three-dimensional printing apparatus in another mode. Referring to FIG. 8, what differs in the embodiment is that, the predetermined height Z1 is kept between the printing space SP and the printing member of the feeding module. In other words, the medium PA does not need to enter the printing space SP, but the predetermined height Z1 is an effective inkjet printing distance of the inkjet assembly A2, thereby ensuring that the inkjet assembly A2 is able to print the two-dimensional pattern on the medium SP. In other words, regardless of the previous embodiments or the embodiment, the feeding module 150 is substantially disposed to the bottom of the printing space SP, and may contact or keep the predetermined height Z1 from the printing space SP according to different embodiments.

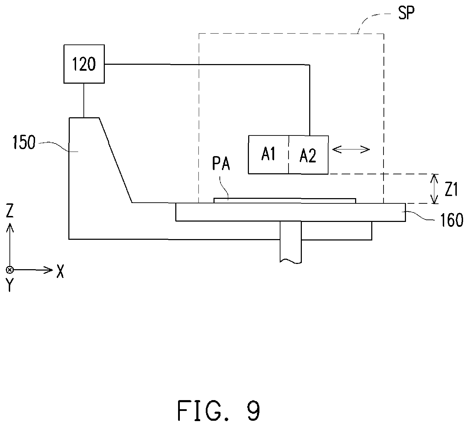

FIG. 9 is a schematic view illustrating a mode of a three-dimensional printing apparatus according to another embodiment of the disclosure. What differs in the embodiment is that the feeding module 150 of the embodiment is assembled beside the forming stage 160, and the feeding module 150 is coplanar with the forming stage 160. In other words, the forming stage 160 is not required to be distant from the printing space. Accordingly, the medium PA is transferred to the forming stage 160 through the feeding module 150, and the control module 120 thus directly drives the inkjet assembly A2 to perform two-dimensional printing on the medium PA on the forming stage 160 to print the two-dimensional pattern on the medium PA on the forming stage 160.

In view of the foregoing, in the embodiments of the disclosure, the three-dimensional printing apparatus may correspondingly drive the nozzle module to print a three-dimensional object or a two-dimensional pattern as required according to whether the feeding module is assembled to the frame or not. In a state, the nozzle module is driven by the control module to move in the frame and define the printing space. The three-dimensional printing assembly of the nozzle module may print the three-dimensional object on the forming stage accordingly when the forming stage is moved to the printing space. The control module may also optionally drive the inkjet assembly to perform inkjet printing and coloring on the three-dimensional object during or after printing of the three-dimensional object. In another state, the forming stage is driven to be moved away from the printing space, and the feeding module is assembled to the frame. Accordingly, the medium is driven by the feeding module to be transferred to or through the printing space. Hence, the inkjet assembly is driven to perform two-dimensional printing on the medium to print the two-dimensional pattern on the medium.

In yet another state, the forming stage may remain closely adjacent to the printing space, and the feeding module is assembled beside the forming stage, making the feeding module coplanar with the forming stage. Thus, the medium is driven by the feeding module to be transferred to the forming stage, and the inkjet assembly is driven to perform two-dimensional printing on the medium on the forming stage.

Based on the above, with the composite nozzle module as well as the assembling and detaching of the feeding module, the three-dimensional printing apparatus is capable of three-dimensional and two-dimensional printing at the same time. Accordingly, with finite resources, the applicability of the three-dimensional printing apparatus is expanded, and the apparatus is thus used more effectively.

## Claims

1. A three-dimensional printing apparatus (100), comprising:
a frame (110);
a control module (120);
a nozzle module (130), movably disposed in the frame (110) and electrically connected to the control module (120), wherein the control module (120) drives the nozzle module (130) to move in the frame (110) and define a printing space (SP), and the control module (120) drives the nozzle module (130) to print a three-dimensional object (200) in the printing space (SP); and
a feeding module (150), detachably assembled to the frame (110) and electrically connected to the control module (120), wherein the control module (120) is adapted to drive the feeding module (150) to transfer a medium (PA) to the printing space (SP) or transfer the medium (PA) to pass by the printing space (SP) and drive the nozzle module (130) to print a two-dimensional pattern on the medium (PA), wherein the feeding module (150) comprises a feed-in member (151), a printing member (152), a feed-out member (153), and a plurality of transfer rollers (R1∼R3) respectively disposed to the feed-in member (151) and the feed-out member (153), and the medium (PA) is transferred from the feed-in member (151) to the printing member (152) before the two-dimensional pattern is printed, and the medium (PA) is transferred from the printing member (151) to the feed-out member (153) after the two-dimensional pattern is printed.

2. The three-dimensional printing apparatus as claimed in claim 1, wherein the nozzle module (130) comprises a three-dimensional printing assembly (A1) and an inkjet assembly (A2), the control module (120) drives the three-dimensional printing assembly (A1) to print the three-dimensional object (200), and drives the inkjet assembly (A2) to print the two-dimensional pattern on the medium (PA).

3. The three-dimensional printing apparatus as claimed in claim 2, wherein the control module (120) further drives the inkjet assembly (A2) to perform inkjet printing and coloring on the three-dimensional object (200).

4. The three-dimensional printing apparatus as claimed in any of the claims 2 to 3, further comprising a forming stage (160) disposed in the frame (110) and electrically connected to the control module (120), wherein the forming stage (160) is moved to the printing space (SP) and the control module (120) drives the three-dimensional printing assembly (A1) to print the three-dimensional object (200) on the forming stage (160).

5. The three-dimensional printing apparatus as claimed in claim 4, wherein the forming stage (160) is moved out of the printing space (SP), and the control module (120) drives the inkjet assembly (A2) to print the two-dimensional pattern on the medium (PA).

6. The three-dimensional printing apparatus as claimed in claims 4 or 5, wherein the forming stage (160) is moved to the printing space (SP), the feeding module (150) is disposed beside the forming stage (160), the medium (PA) is transferred from the feeding module (150) to the forming stage (160), and the control module (120) drives the inkjet assembly (A2) to print the two-dimensional pattern on the medium (PA).

7. The three-dimensional printing apparatus as claimed in any of the claims 1 to 6, wherein the medium (PA) is driven by the transfer rollers (R1∼R3) to be continuously transferred through the feed-in member (151), the printing member (152), and the feed-out member (153) during printing of the two-dimensional pattern.

8. The three-dimensional printing apparatus as claimed in any of the claims 2 to 7, wherein the inkjet assembly (A2) is fixedly located above the printing member (152) and keeps a predetermined height (Z1) with respect to the printing member (152).

9. The three-dimensional printing apparatus as claimed in any of the claims 1 to 8, wherein the medium (PA) is transferred from the feed-in member (151) and fixed at the printing member (152) before the two-dimensional pattern is printed, and the medium (PA) is transferred from the printing member (PA) to the feed-out member (153) after the two-dimensional pattern is printed.

10. The three-dimensional printing apparatus as claimed in any of the claims 2 to 9, wherein the control module (120) drives the inkjet assembly (A2) to operate on a plane and print the two-dimensional pattern on the medium (PA), and the plane is parallel to the printing member (152) and keeps a predetermined height (Z1) with respect to the printing member (152).

11. The three-dimensional printing apparatus as claimed in any of the claims 1 to 10, wherein the printing space (SP) keeps a predetermined height (Z1) relative to the printing member (152) during printing of the two-dimensional pattern.

12. The three-dimensional printing apparatus as claimed in any of the claims 1 to 11, wherein the feeding module (150) is disposed at a bottom of the printing space (SP).

13. The three-dimensional printing apparatus as claimed in any of the claims 1 to 12, further comprising a scan module detachably assembled to the feed-out member (153).

## Patentansprüche

1. Eine dreidimensionale Druckvorrichtung (100), umfassend:
einen Rahmen (110);
ein Steuermodul (120);
ein Düsenmodul (130), das beweglich im Rahmen (110) angeordnet und elektrisch mit dem Steuermodul (120) verbunden ist, wobei das Steuermodul (120) das Düsenmodul (130) antreibt, um sich in dem Rahmen (110) zu bewegen und einen Druckraum (SP) zu definieren, und das Steuermodul (120) das Düsenmodul (130) antreibt, um ein dreidimensionales Objekt (200) in dem Druckraum (SP) zu drucken; und
ein Zuführmodul (150), das lösbar mit dem Rahmen (110) verbunden und elektrisch mit dem Steuermodul (120) verbunden ist, wobei das Steuermodul (120) angepasst ist, um das Zuführmodul (150) anzutreiben, um ein Medium (PA) in den Druckraum (SP) zu übertragen oder das Medium (PA) durch den Druckraum (SP) zu leiten und das Düsenmodul (130) anzutreiben, um ein zweidimensionales Muster auf das Medium (PA) zu drucken, wobei das Zuführmodul (150) ein Einspeiseelement (151) umfasst, ein Druckelement (152), ein Ausspannelement (153) und eine Vielzahl von Übertragungswalzen (R1∼R3), die jeweils an dem Einspannelement (151) und dem Ausspannelement (153) angeordnet sind, und das Medium (PA) von dem Einspannelement (151) auf das Druckelement (152) übertragen wird, bevor das zweidimensionale Muster gedruckt wird, und das Medium (PA) von dem Druckelement (151) auf das Ausspannelement (153) übertragen wird, nachdem das zweidimensionale Muster gedruckt wurde.

2. Die dreidimensionale Druckvorrichtung nach Anspruch 1, wobei das Düsenmodul (130) eine dreidimensionale Druckanordnung (A1) und eine Tintenstrahlanordnung (A2) umfasst, das Steuermodul (120) die dreidimensionale Druckanordnung (A1) zum Drucken des dreidimensionalen Objekts (200) antreibt und die Tintenstrahlanordnung (A2) zum Drucken des zweidimensionalen Musters auf das Medium (PA) antreibt.

3. Die dreidimensionale Druckvorrichtung nach Anspruch 2, wobei das Steuermodul (120) die Tintenstrahlanordnung (A2) weiter antreibt, um den Tintenstrahldruck und die Einfärbung auf dem dreidimensionalen Objekt (200) durchzuführen.

4. Dreidimensionale Druckvorrichtung nach einem der Ansprüche 2 bis 3, ferner umfassend eine im Rahmen (110) angeordnete und mit dem Steuermodul (120) elektrisch verbundene Formstufe (160), wobei die Formstufe (160) in den Druckraum (SP) bewegt wird und das Steuermodul (120) die dreidimensionale Druckanordnung (A1) antreibt, um das dreidimensionale Objekt (200) auf der Formstufe (160) zu drucken.

5. Die dreidimensionale Druckvorrichtung nach Anspruch 4, wobei die Formgebungsstufe (160) aus dem Druckraum (SP) herausbewegt wird und das Steuermodul (120) die Tintenstrahlanordnung (A2) antreibt, um das zweidimensionale Muster auf das Medium (PA) zu drucken.

6. Dreidimensionale Druckvorrichtung nach Anspruch 4 oder 5, wobei die Formgebungsstufe (160) in den Druckraum (SP) bewegt wird, das Zuführmodul (150) neben der Formgebungsstufe (160) angeordnet ist, das Medium (PA) vom Zuführmodul (150) in die Formgebungsstufe (160) übertragen wird und das Steuermodul (120) die Tintenstrahlanordnung (A2) antreibt, um das zweidimensionale Muster auf das Medium (PA) zu drucken.

7. Dreidimensionale Druckvorrichtung nach einem der Ansprüche 1 bis 6, wobei das Medium (PA) von den Übertragungswalzen (R1∼R3) angetrieben wird, die kontinuierlich durch das Einzugselement (151), das Druckelement (152) und das Auszugselement (153) während des Druckens des zweidimensionalen Musters übertragen werden.

8. Dreidimensionale Druckvorrichtung nach einem der Ansprüche 2 bis 7, wobei die Tintenstrahlanordnung (A2) fest über dem Druckelement (152) angeordnet ist und eine vorbestimmte Höhe (Z1) in Bezug auf das Druckelement (152) beibehält.

9. Dreidimensionale Druckvorrichtung nach einem der Ansprüche 1 bis 8, wobei das Medium (PA) von dem Einzugselement (151) übertragen und an dem Druckelement (152) befestigt wird, bevor das zweidimensionale Muster gedruckt wird, und das Medium (PA) von dem Druckelement (PA) auf das Auszugselement (153) übertragen wird, nachdem das zweidimensionale Muster gedruckt wurde.

10. Dreidimensionale Druckvorrichtung nach einem der Ansprüche 2 bis 9, wobei das Steuermodul (120) die Tintenstrahlanordnung (A2) antreibt, um auf einer Ebene zu arbeiten und das zweidimensionale Muster auf das Medium (PA) zu drucken, und die Ebene parallel zu dem Druckelement (152) verläuft und eine vorbestimmte Höhe (Z1) in Bezug auf das Druckelement (152) beibehält.

11. Dreidimensionale Druckvorrichtung, wie sie in einem der Ansprüche 1 bis 10 beansprucht wird, wobei der Druckraum (SP) während des Druckens des zweidimensionalen Musters eine vorbestimmte Höhe (Z1) in Bezug auf das Druckelement (152) beibehält.

12. Dreidimensionale Druckvorrichtung, wie sie in einem der Ansprüche 1 bis 11 beansprucht wird, wobei das Zuführmodul (150) an einer Unterseite des Druckraums (SP) angeordnet ist.

13. Dreidimensionale Druckvorrichtung, wie sie in einem der Ansprüche 1 bis 12 beansprucht wird, ferner umfassend ein Abtastmodul, das abnehmbar an dem Auslaufelement (153) montiert ist.

## Revendications

1. Imprimante en trois dimensions (100), comprenant :
un bâti (110) ;
un module de commande (120) ;
un module de buse (130) disposé de manière mobile dans le bâti (110) et relié électriquement au module de commande (120), le module de commande (120) amenant le module de buse (130) à se déplacer dans le bâti (110) et à définir un espace d'impression (SP), et le module de commande (120) amenant le module de buse (130) à imprimer un objet en trois dimensions (200) dans l'espace d'impression (SP) ; et
un module d'alimentation (150), assemblé de manière détachable au bâti (110) et relié électriquement au module de commande (120), le module de commande (120) étant adapté pour amener le module d'alimentation (150) à transférer un support (PA) à l'espace d'impression (SP) ou transférer le support (PA) pour traverser l'espace d'impression (SP) et amener le module de buse (130) à imprimer un motif en deux dimensions sur le support (PA), le module d'alimentation (150) comprenant un élément d'entrée (151), un élément d'impression (152), un élément de sortie (153), et une pluralité de rouleaux de transfert (R1∼R3) disposés respectivement sur l'élément d'entrée (151) et l'élément de sortie (153), et le support (PA) étant transféré de l'élément d'entrée (151) à l'élément d'impression (152) avant l'impression du motif en deux dimensions, et le support (PA) étant transféré de l'élément d'impression (151) à l'élément de sortie (153) après l'impression du motif en deux dimensions.

2. Imprimante en trois dimensions selon la revendication 1, dans laquelle le module de buse (130) comprend un ensemble d'impression en trois dimensions (A1) et un ensemble à jet d'encre (A2), le module de commande (120) amène l'ensemble d'impression en trois dimensions (A1) à imprimer l'objet en trois dimensions (200), et amène l'ensemble à jet d'encre (A2) à imprimer le motif en deux dimensions sur le support (PA).

3. Imprimante en trois dimensions selon la revendication 2, dans laquelle le module de commande (120) amène en outre l'ensemble à jet d'encre (A2) à réaliser une impression à jet d'encre et une coloration sur l'objet en trois dimensions (200).

4. Imprimante en trois dimensions selon l'une quelconque des revendications 2 et 3, comprenant en outre une platine de formation (160) disposée dans le bâti (110) et reliée électriquement au module de commande (120), la platine de formation (160) étant déplacée vers l'espace d'impression (SP) et le module de commande (120) amenant l'ensemble d'impression en trois dimensions (A1) à imprimer l'objet en trois dimensions (200) sur la platine de formation (160).

5. Imprimante en trois dimensions selon la revendication 4, dans laquelle la platine de formation (160) est déplacée hors de l'espace d'impression (SP), et le module de commande (120) amène l'ensemble à jet d'encre (A2) à imprimer le motif en deux dimensions sur le support (PA).

6. Imprimante en trois dimensions selon la revendication 4 ou 5, dans laquelle la platine de formation (160) est déplacée vers l'espace d'impression (SP), le module d'alimentation (150) est disposé à côté de la platine de formation (160), le support (PA) est transféré du module d'alimentation (150) à la platine de formation (160), et le module de commande (120) amène l'ensemble à jet d'encre (A2) à imprimer le motif en deux dimensions sur le support (PA).

7. Imprimante en trois dimensions selon l'une quelconque des revendications 1 à 6, dans laquelle le support (PA) est amené, par les rouleaux de transport (R1∼R3), à être transféré en continu à travers l'élément d'entrée (151), l'élément d'impression (152) et l'élément de sortie (153) pendant une impression du motif en deux dimensions.

8. Imprimante en trois dimensions selon l'une quelconque des revendications 2 à 7, dans laquelle l'ensemble à jet d'encre (A2) est placé de manière fixe au-dessus de l'élément d'impression (152) et maintient une hauteur prédéterminée (Z1) par rapport à l'élément d'impression (152).

9. Imprimante en trois dimensions selon l'une quelconque des revendications 1 à 8, dans laquelle le support (PA) est transféré à partir de l'élément d'entrée (151) et fixé au niveau de l'élément d'impression (152) avant l'impression du motif en deux dimensions, et le support (PA) est transféré de l'élément d'impression (152) à l'élément de sortie (153) après l'impression du motif en deux dimensions.

10. Imprimante en trois dimensions selon l'une quelconque des revendications 2 à 9, dans laquelle le module de commande (120) amène l'ensemble à jet d'encre (A2) à fonctionner sur un plan et imprimer le motif en deux dimensions sur le support (PA), et le plan est parallèle à l'élément d'impression (152) et maintient une hauteur prédéterminée (Z1) par rapport à l'élément d'impression (152).

11. Imprimante en trois dimensions selon l'une quelconque des revendications 1 à 10, dans laquelle l'espace d'impression (SP) maintient une hauteur prédéterminée (Z1) par rapport à l'élément d'impression (152) pendant une impression du motif en deux dimensions.

12. Imprimante en trois dimensions selon l'une quelconque des revendications 1 à 11, dans laquelle le module d'alimentation (150) est disposé à une partie inférieure de l'espace d'impression (SP).

13. Imprimante en trois dimensions selon l'une quelconque des revendications 1 à 12, comprenant en outre un module de balayage assemblé de manière détachable à l'élément de sortie (153).
